# EUROPÄISCHE PATENTSCHRIFT

(11) **EP 4 146 005 B1**
(45) Veröffentlichungstag und Bekanntmachung des Hinweises auf die Patenterteilung: **29.05.2024**
(21) Anmeldenummer: 21726846.5
(22) Anmeldetag: 12.04.2021
(51) Int. Cl.: A01N 59/16, A01P 7/00

(54) **MITTEL ZUR BEKÄMPFUNG VON SCHÄDLINGEN UND VERFAHREN ZU SEINER VERWENDUNG**
COMPOSITION FOR PEST CONTROL AND METHOD OF USING IT
COMPOSÉ DE LUTTE ANTIPARASITAIRE ET MODE D'UTILISATION

(30) Priorität: 15.04.2020 DE 102020110265
(43) Veröffentlichungstag der Anmeldung: 15.03.2023
(73) Patentinhaber: Nass, Jörg, 47574 Goch (DE); Gündüz, Fatih, 45881 Gelsenkirchen (DE)
(72) Erfinder: Nass, Jörg, 47574 Goch (DE); Gündüz, Fatih, 45881 Gelsenkirchen (DE)
(74) Vertreter: Bauer, Dirk
(86) Internationale Anmeldenummer: PCT/EP2021/059372
(87) Internationale Veröffentlichungsnummer: WO 2021/209354

(56) Entgegenhaltungen:
- CN-A- 101 302 710
- Clausen Carol A ET AL: "The role of particle size of particulate nano-zinc oxide wood preservatives on termite mortality and leach resistance", Nanoscale Research Letters, 15. Juni 2011 (2011-06-15), Seiten 1-5, XP055831251, DOI: 10.1186/1556-276X-6-427 Gefunden im Internet: URL:https://nanoscalereslett.springeropen. com/track/pdf/10.1186/1556-276X-6-427.pdf [gefunden am 2021-08-10] in der Anmeldung erwähnt
- LYKIDIS CHARALAMPOS ET AL: "IRG/WP 16-30691: The termite resistance of wood impregnated with nano-zinc oxide and nano-zinc borate dispersions", PROCEEDINGS 47TH IRG ANNUAL MEETING, LISBON, PORTUGAL, 1. Januar 2016 (2016-01-01), Seiten 1-10, XP055831260, Stockholm, Sweden Gefunden im Internet: URL:http://users.teilar.gr/~lykidis/papers /PC18_IRG%2016-30691-1.pdf>
- LEI HUA ET AL: "Characterization of the dispersion of tetrapod-like nano-ZnO whiskers in acrylic resin and properties of the nano-composite coating system", JOURNAL OF COATINGS TECHNOLOGY AND RESEARCH, Bd. 7, Nr. 1, 1. Januar 2010 (2010-01-01), Seiten 91-97, XP055831255, US ISSN: 1547-0091, DOI: 10.1007/s11998-009-9162-8 Gefunden im Internet: URL:https://link.springer.com/content/pdf/ 10.1007/s11998-009-9162-8.pdf>
- YOGENDRA KUMAR MISHRA ET AL: "ZnO tetrapod materials for functional applications", MATERIALS TODAY, Bd. 21, Nr. 6, 1. Juli 2018 (2018-07-01), Seiten 631-651, XP055744117, AMSTERDAM, NL ISSN: 1369-7021, DOI: 10.1016/j.mattod.2017.11.003
- MANTANIS GEORGE ET AL: "Evaluation of mold, decay and termite resistance of pine wood treated with zinc- and copper-based nanocompounds", INTERNATIONAL BIODETERIORATION & BIODEGRADATION, Bd. 90, 1. Mai 2014 (2014-05-01), Seiten 140-144, XP055831362, Amsterdam , NL ISSN: 0964-8305, DOI: 10.1016/j.ibiod.2014.02.010 Gefunden im Internet: URL:http://mantanis.users.uth.gr/TR-66.pdf > in der Anmeldung erwähnt

## Beschreibung

Die Erfindung betrifft ein Mittel zur Bekämpfung von Schädlingen und ein Verfahren zu seiner Verwendung.

### Hintergrund

Termiten richten weltweit Schäden in Höhe von vielen Milliarden Euro jährlich an.

Sie zerstören Schwellenhölzer, Ständerwerk und Dachsparren, da sie sich von deren hölzernen Bestandteilen ernähren. Auch über Zuckerrohr-, Tee- und Kaffeeplantagen sowie über Geldscheine und Gerichtsakten sollen sie schon hergefallen sein.

Die Liste möglicher Gegenmittel ist lang. Am gebräuchlichsten sind Insektizide und Giftköder. Bei einem örtlich eng begrenzten Befall durch Trockenholztermiten können die Insekten auch mit heißer Luft oder mit fast minus 200 Grad Celsius kaltem, flüssigem Stickstoff bekämpft werden. Allerdings müssen die befallenen Räume dazu in der Regel geräumt werden. Manche Fachbetriebe setzen auch Mikrowellentechnik oder Elektroschocks zum Aufheizen ein. Gegen Termiten in unbehandeltem Holz gibt es zudem ein Mittel, das Verdauungsenzyme lahmlegt. Die Insekten verhungern dann bei vollem Leib.

Die meisten Bekämpfungsmittel basieren auf chemischen Substanzen wie etwa Insektiziden, Herbiziden oder Fungiziden.

### Stand der Technik

Die Verwendung von Zinkoxid, welches in Form von tetrapodenförmigen Kristallen vorliegt, ist z. B. in der EP 2 782 103 A1, allerdings für Lackdraht, und in der DE 10 2013 104 195 A1 für optoelektronische Bauelemente beschrieben.

Aus der CN 101 302 710 A ist ein Mittel bekannt, das Zinkoxid, welches in tetrapodenförmigen Kristallen vorliegt, Polyvinylpyrrolidon sowie Wasser enthält.

Untersuchungen zur Verwendung von Zinkoxid-Kristallen in Nanometergröße zur Bekämpfung von Termiten werden beschrieben in
- CLAUSEN, C.A. [u.a.]: The role of particle size of particulate nano-zinc oxide wood preservatives on termite mortality and leach resistance. In: Nanoscale Res. Lett. Bd. 6, 2011, Nr. 427. - ISSN 1556-276X
- LYKIDIS, C. [u.a.]: Termite resistance of beech wood treated with zinc oxide and zinc borate nanocompounds. In: Wood Mater. Sci. Eng., Bd. 13, 2018, Nr. 1 S. 45-49. - ISSN 1748-0272
- MANTANIS, G.; TERZI, E.; KARTAL, S.N.; PAPADOPOULOS, A.N.: Evalution of mold, decay and termite resistance of pine wood treated with zincand copper-based nanocompunds. In: Int. Biodeter. Biodegr. Bd. 90, 2014, S. 140-144. - ISSN 0964-8305.

### Aufgabe und Lösung der Erfindung

Aufgabe der Erfindung: Es sollen die oben genannten Nachteile des Standes der Technik vermieden werden, insbesondere soll das Mittel zur Bekämpfung von Schädlingen effektiv auf rein mechanische Weise, also ohne chemische Gifte, wirken.

Diese Aufgabe wird erfindungsgemäß durch das Mittel zur Bekämpfung von Schädlingen gelöst, wobei das Mittel Zinkoxid, welches in Form von tetrapodenförmigen Kristallen vorliegt, Polyvinylpyrrolidon sowie Wasser enthält und durch die folgende Zusammensetzung gekennzeichnet ist:

| | |
|---|---|
| Zinkoxid: | 0,5 - 5 Gew.-% |
| Polyvinylpyrrolidon: | 40 - 65 Gew.-% |
| Wasser: | Rest. |

### Vorteile der Erfindung

Unter anderem werden die folgenden Vorteile erreicht:
Das Mittel ist eine rein mechanische Abwehr von Schädlingen. Es besteht aus einer wässrigen Polyvinylpyrrolidon-Lösung (PVP), z.B. "Luvitec^{®} K 90 Lösung 20%" von BASF, und Zinkoxid, das in Form von Tetrapoden-Kristallen in Pulverform vorliegt. Die Zinkoxid-Tetrapoden-Kristalle sind dabei einige Nanometer groß (Nano-Zinkoxid-Tetrapoden / NZT). Das Mittel wird zur Anwendung fertig angemischt hergestellt. Das fertig gemischte Mittel ist gebrauchsfähig inklusive Trägermaterial PVP.

Je nach Anforderung kann dieses fließfähige Mittel auch noch andere Stoffe enthalten. Dadurch kann das Mittel eine andere Viskosität aufweisen und insbesondere auch anhaftend sein.

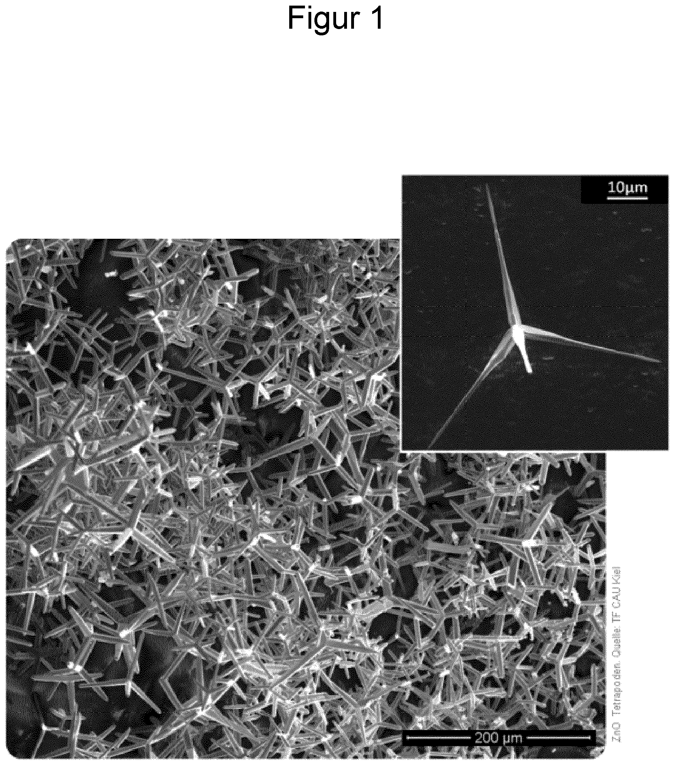

Durch die wie in Figur 1 dargestellte spezielle Tetrapodenform werden die verschiedenen Schädlinge entweder bei der Nahrungsaufnahme oder durch den bloßen Kontakt mit den Nanopartikeln getötet.

Die Tötung erfolgt dabei rein mechanisch und ohne etwaige Umweltbelastung.

Vorteilhafte Ausgestaltungen der Erfindung sind in den Unteransprüchen angeführt.

So wird vorgeschlagen,
- dass der Durchmesser der Umkugel der tetrapodenförmigen Zinkoxid-Kristalle zwischen 1 und 100 Nanometer groß ist,
- dass das Mittel ein Natur- und/oder ein Kunstharz enthält.

Das Mittel wirkt, indem die Nano-Zinkoxid-Tetrapoden-Partikel hochkonzentriert in die Verdauungsorgane der Schädlinge aufgenommen werden und dort zum Stoffwechselversagen führen.

Eine spezifische Eigenschaft der Nano-Zinkoxid-Tetrapoden ist vor allem ihre Form (siehe Figur 1).

Sie führt bei äußerlichem Kontakt zu mikroskopisch kleinen Verletzungen zwischen Gelenken und in offen liegenden Schleimhäuten. Durch die tetrapodische Form der Nanopartikel ist es nicht mehr möglich, diese zu entfernen. Jeder Versuch, sich dieser zu entledigen, verursacht stattdessen ein tieferes Eindringen der Tetrapoden.

So führt auch die Aufnahme in den Organismus zu weitreichenden Schädigungen.

Wenn Nano-Zinkoxid-Tetrapoden an sich ausschließlich mit Wasser vermischt werden, verklumpen die Tetrapoden und sind für die geplante Verwendung unbrauchbar. Um die gewünschte Wirkung zu erzielen, musste daher ein geeignetes Trägermaterial gefunden werden, um die Tetrapoden gezielt und ohne kurzfristigen Verlust an oder in den Einsatzort zu bringen.

Als Trägermaterial wird Polyvinylpyrrolidon (PVP) verwendet. PVP ist ein weitgehend ungefährlicher Stoff und kann auch von Organismen aufgenommen werden.

Die Zinkoxid-Tetrapoden haben eine Größe von 1 bis 100 Nanometern.

Zur Herstellung von 100 ml des Mittels können z.B. 60 ml Polyvinylpyrrolidon "Luvitec^{®} K 90 Lösung 20%" (Handelsname der Firma BASF SE), 35 ml Wasser und 5 g Nano-Zinkoxid-Tetrapoden der Firma Tianjin YR Chemspec Co., Ltd. mittels eines Dispergierrührers auf niedriger bis mittlere Drehzahl ca. 1 bis 3 Minuten verrührt werden.

Optional kann das Mittel bei der Herstellung noch mit einem oder mehreren Harzen vermischt werden. Dies geschieht ebenfalls mittels eines Dispergierrührers. Das ursprüngliche Mittel haftet dabei kurzzeitig an dem Harz bzw. den Harzen. Das Mittel kann so wetterfest und haftend auf einem vertikalen Gegenstand (z.B. einem Baum) aufgetragen werden.

Das Harz kann dabei aus Naturharz und/oder Kunstharz bestehen. Bei den Versuchen wurde als Naturharz das Naturharz-Öl "MELDOS Natur-Hartöl Nr. 265" (Handelsname der Firma Livos Pflanzenchemie-, Forschungs- und Entwicklungsgesellschaft mbH & Co. Kommanditgesellschaft) und als Kunstharz das Polyesterharz "presto Polyesterharz" (Handelsname der Firma MOTIP DUPLI GmbH) verwendet. Als Kunstharz können auch Epoxidharz oder Acrylharz verwendet werden.

### Ausführungsbeispiele

Im Folgenden werden mehrere Ausführungsbeispiele der Erfindung näher beschrieben.

Es zeigt Figur 1 die Zinkoxid-Tetrapoden in einer elektronenmikroskopischen Aufnahme.

### Beispiel 1: Termitenbekämpfung an Wohngebäuden

Die zum Beispiel in den nordamerikanischen Staaten weit verbreitete Holzbauweise in der Rohstruktur der Gebäude führt jährlich zu erheblichen und kostenintensiven Schäden.

Das Mittel enthält in diesem Beispiel Harz. Die verwendeten Bauhölzer werden vor ihrer Montage mit dem Mittel deckend beschichtet.

Die Beschichtung kann im Spritzdruckverfahren oder händisch mit einer Anstrichhilfe erfolgen.

Nach einer Trocknungszeit von 2 bis 4 Stunden können die Bauhölzer eingebaut werden.

Das Mittel kann auch nachträglich auf schon verbaute Materialien aufgebracht werden.

Auch kann das Mittel mit herkömmlichen Holzschutzmitteln kombiniert werden, da es auch erforderlich sein, kann die Hölzer vor Feuchteeintrag zu schützen.

Das Mittel ist in diesem Beispiel in der Regel farblos und leicht viskos.

Bei der Verarbeitung ist auf die üblichen Arbeitsschutzmaßnahmen zu achten.

Bei einem durchschnittlichen Gebäude von der Größe eines Einfamilienhauses in Holzständerbauweise werden etwa 40 m³ Holz verarbeitet. Dieses Beschichten würde etwa 100 Liter des Mittels benötigen.

Nach der Behandlung sind die Hölzer vor Termitenfraß geschützt.

### Beispiel 2: Borkenkäferabwehr oder Bekämpfung von Raupen oder Schnecken

In Fichtenwäldern kommt es durch Borkenkäferfraß immer wieder zu verheerenden Schäden. Verursacher ist vor allem der Buchdrucker; seit dem Trockenjahr 2003 hat auch der wesentlich kleinere Kupferstecher maßgeblich zum Absterben großer Fichtenbestände beigetragen. Der Buchdrucker ist den gemäßigten Breiten der gefährlichste Borkenkäfer und Forstschädling. Ausgangspunkt von Massenvermehrungen sind Schadereignisse wie Windwurf, Schneebruch oder Trockenheit.

Zur mechanischen Abwehr werden nun Ringfallen angebracht. Eine Ringfalle ist ein kreisrundes Behältnis, welches einen Gegenstand umschließt. Der Füllstoff, der in die Falle eingebracht wird, kann eine Flüssigkeit oder ein trockenes Pulver sein.

Das Mittel wird mit einem Insektennahrungsmittel vermischt und die Ringfalle wird anschließend damit bestückt.

Die Ringfalle bildet eine Barriere, den die fußläufigen Insekten überqueren müssen, um ihren Weg weiterzuführen. Während des Überlaufens der Falle werden diese mit dem Mittel benetzt.

Auch ist es auch möglich, das flüssige Mittel noch mit einem Natur- oder Kunstharz zu versetzen und es dann zu verwenden. Für die Anwendung an vertikalen Gegenständen wird ein Teil des fertigen Mittels mit drei Teilen Natur- oder Kunstharz vermischt und in einen Behälter gefüllt.

Anstatt eine Ringfalle zu verwenden, kann das Mittel kurz vor der Anwendung mit einem Natur- oder Kunstharz kombiniert und danach ganzflächig auf einen zu schützenden Baumstamm gesprüht oder gestrichen werden.

Das fertige Mittel verbindet sich nur kurzzeitig mit Natur- oder Kunstharzen. Diese werden gebraucht, um das Mittel wetterfest und haftend an einen vertikalen Gegenstand (z.B. Baum) anzubringen.

Da sich jetzt auf der Oberfläche der Baumrinde kleine Nano-Zinkoxid-Tetrapoden befinden, welche messerartige Gebilde mit vier messerartigen Beinen sind, werden die Baumschädlinge (Borkenkäfer) beim Versuch, sich in die Rinde zu bohren, um dort Eier einzulegen, abgetötet.

### Beispiel 3:

Das Mittel, welches hier kein Natur- oder Kunstharz enthält, enthält PVP, um die Zinkoxid-Tetrapoden zu binden. In Wasser würden die Zinkoxid-Tetrapoden ohne Zusatz von PVP verklumpen. PVP ist ein weitgehend ungefährlicher Stoff und kann von Organismen aufgenommen werden.

Das Mittel wurde unter eine Zuckerlösung gemischt, welche anschließend einer Ameisengruppe von 15 bis 20 Tieren, denen zwei Tage lang vorher jegliche Flüssigkeitsaufnahme in einer keimfreien Umgebung unmöglich gemacht wurde, vorgesetzt.

Nach 24 Stunden trat deutlicher Bewegungsrückgang ein.

Nach 48 Stunden war die Gruppe fast völlig unbeweglich auch gegenüber äußerlichen Reizen.

Der Tod trat nach 60 bis 84 Stunden ein.

Bei einer Termitengruppe von 15 bis 20 Tieren wurde ebenfalls nach 2 Tagen Flüssigkeitsentzug die gleiche Versuchsreihe durchgeführt. Die Ergebnisse waren fast identisch.

### Beispiel 4:

Eine Termitengruppe bekam nach dreitägiger Isolation einen 50 mm x 50 mm großen naturbelassenen Fichtenholzwürfel in ihr Behältnis gesetzt. Wie erwartet fingen die Insekten an, den Holzwürfel mit ihren Beißwerkzeugen zu bearbeiten.

Der Versuch wurde wiederholt, allerdings wurde diesmal der Fichtenholzwürfel mit dem Mittel, welches kein Harz enthielt, beschichtet. Auch da fingen die Termiten an, den Holzwürfel zu bearbeiten. Nach 24 Stunden nahm die Intensität der Bearbeitung deutlich ab. Nach weiteren 12 Stunden wurde der Würfel nicht mehr belagert.

Ähnliche Ergebnisse wurden jeweils erzielt, als man das Mittel mit Natur- oder Kunstharz versetzt und den Holzwürfel dann mit dem Mittel beschichtet hat.

### Beispiel 5:

Eine Borkenkäfergruppe erhielt in einer isolierten Umgebung ausschließlich Fichten- und Tannenholz als Nahrungsmittel. Nach drei Wochen gab es keine Veränderung der Population.

Das Mittel enthält in diesem Beispiel Natur- und Kunstharz. Eine ebenfalls aus Borkenkäfern bestehende Vergleichsgruppe erhielt ebenfalls Fichten- und Tannenholz als Nahrungsmittel, welches diesmal jedoch jeweils mit dem Mittel beschichtet worden war. Einzelne Tiere waren nach 1-2 Wochen, die gesamte Gruppe nach drei Wochen tot.

Es ist anzunehmen, dass ähnliche Wirkungen sich auch bei anderen Schädlingen, wie zum Beispiel Schnecken, Eichenprozessionsspinnern, usw., zeigen werden.

### Weitere Vorteile

Weitere Vorteile bei der Bekämpfung von Schädlingen mit dem Mittel sind auch längere Bekämpfungsintervalle, die sich auf bis zu eine Anwendung im Jahr beschränken können.

Ein weiterer Vorteil ist die lange Haltbarkeit des ausgebrachten Mittels. Durch eine feuchte Witterung wird das Mittel nicht schnell in das Erdreich gespült.

Bei Verwendung im trockenen Innenbereich reicht ein einmaliger Auftrag für Jahrzehnte aus. Eine nachträgliche Schädlingsbekämpfung ist nicht mehr nötig.

## Patentansprüche

1. Mittel zur Bekämpfung von Schädlingen, wobei das Mittel Zinkoxid, welches in Form von tetrapodenförmigen Kristallen vorliegt, Polyvinylpyrrolidon sowie Wasser enthält,
**gekennzeichnet durch**
die folgende Zusammensetzung
| | |
|---|---|
| Zinkoxid: | 0,5 - 5 Gew.-% |
| Polyvinylpyrrolidon: | 40 - 65 Gew.-% |
| Wasser: | Rest. |

2. Mittel zur Bekämpfung von Schädlingen nach Anspruch 1,
**dadurch gekennzeichnet,**
**dass** der Durchmesser der Umkugel der tetrapodenförmigen Zinkoxid-Kristalle zwischen 1 und 100 Nanometer groß ist.

3. Mittel zur Bekämpfung von Schädlingen nach Anspruch 1,
**dadurch gekennzeichnet,**
**dass** das Mittel ein Natur- und/oder ein Kunstharz enthält.

4. Verfahren zur Verwendung des Mittels nach Anspruch 1 zur Abtötung von Ameisen und Termiten, indem das Mittel unter eine Zuckerlösung gemischt wird und die Zuckerlösung anschließend in der Nähe von Ameisen oder Termiten diesen bereitgestellt wird.

5. Verfahren zur Verwendung des Mittels nach Anspruch 1 zum Schutz von Bäumen und von Holz vor Termiten und Borkenkäfern, indem die Bäume bzw. Hölzer mit dem Mittel beschichtet werden.

6. Verfahren nach Anspruch 5, wobei das Mittel kurz vor der Anwendung mit Natur- oder Kunstharzen vermischt wird.

7. Verfahren nach Anspruch 5 zum Schutz von Fichten und Tannen.

## Claims

1. A pest control agent, wherein the agent contains zinc oxide in the form of tetrapod-shaped crystals, polyvinylpyrrolidone as well as water,
**characterized by**
the following composition
| | |
|---|---|
| zinc oxide: | 0.5 - 5 % by weight; |
| polyvinylpyrrolidone: | 40 - 65 % by weight; |
| water: | the remaining part. |

2. The pest control agent as claimed in claim 1,
**characterized in that**
the diameter of the circumscribed sphere of the tetrapod-shaped zinc oxide crystals is between 1 and 100 nanometres in size.

3. The pest control agent as claimed in claim 1,
**characterized in that**
the agent contains a natural resin and/or a synthetic resin.

4. A method for using the agent as claimed in claim 1, for killing ants and termites, in which the agent is mixed into a sugar solution and then the sugar solution is provided to ants or termites in the vicinity thereof.

5. The method for using the agent as claimed in claim 1 for the protection of trees and of timber from termites and bark beetles, in which the trees or timbers are coated with the agent.

6. The method as claimed in claim 5, wherein the agent is mixed with natural resin or synthetic resin shortly before use.

7. The method as claimed in claim 5, for the protection of spruce trees and fir trees.

## Revendications

1. Agent de lutte contre les nuisibles, ledit agent contenant de l'oxyde de zinc, qui est présent sous forme de cristaux ayant la forme de tétrapodes, du polyvinylpyrrolidone ainsi que de l'eau,
**caractérisé par**
la composition suivante
| | |
|---|---|
| oxyde de zinc : | 0,5 à 5 % en poids |
| polyvinylpyrrolidone : | 40 à 65 % en poids |
| eau : | complément à 100 %. |

2. Agent de lutte contre les nuisibles selon la revendication 1,
**caractérisé en ce que**
le diamètre de la sphère circonscrite des cristaux ayant la forme de tétrapodes est compris entre 1 et 100 nanomètres.

3. Agent de lutte contre les nuisibles selon la revendication 1,
**caractérisé en ce que**
ledit agent contient une résine d'origine naturelle et/ou de synthèse.

4. Procédé de mise en œuvre de l'agent selon la revendication 1 pour éliminer des fourmis et termites, consistant à mélanger ledit agent à une solution de sucre pour ensuite disposer cette solution de sucre à proximité de fourmis ou de termites afin que celles-ci puissent y accéder.

5. Procédé de mise en œuvre de l'agent selon la revendication 1 pour protéger des arbres et du bois de termites et de scolytes en appliquant une couche dudit agent sur les arbres et/ou le bois.

6. Procédé selon la revendication 5, ledit agent étant mélangé, avant son application, à des résines d'origine naturelle ou de synthèse.

7. Procédé selon la revendication 5, visant à protéger des épicéas et des sapins.
